# EUROPÄISCHE PATENTSCHRIFT

(11) **EP 2 990 244 B1**
(45) Veröffentlichungstag und Bekanntmachung des Hinweises auf die Patenterteilung: **30.10.2019**
(21) Anmeldenummer: 15181502.4
(22) Anmeldetag: 19.08.2015
(51) Int. Cl.: B60J 3/04, G02F 1/15

(54) **LANDWIRTSCHAFTLICHES FAHRZEUG MIT EINER KABINENSCHEIBE MIT VERÄNDERBARER TRANSPARENZ**
AGRICULTURAL VEHICLE WITH A CABIN PANE WITH VARIABLE TRANSPARENCY
VEHICULE AGRICOLE AYANT UNE VITRE DE CABINE A TRANSPARENCE VARIABLE

(30) Priorität: 25.08.2014 DE 102014112120
(43) Veröffentlichungstag der Anmeldung: 02.03.2016
(73) Patentinhaber: CLAAS Selbstfahrende Erntemaschinen GmbH, 33428 Harsewinkel (DE)
(72) Erfinder: Volbracht, Andreas, 59302 Oelde (DE)
(74) Vertreter: CLAAS Gruppe

(56) Entgegenhaltungen:
- WO-A1-2012/156779
- DE-A1- 10 352 226
- DE-U1-202008 009 837
- JP-A- 2003 276 436
- US-A1- 2009 058 126
- US-A1- 2012 019 891

## Beschreibung

Die Erfindung betrifft ein landwirtschaftliches Fahrzeug mit einer Kabinenscheibe, welche eine veränderbare Transparenz aufweist.

Landwirtschaftliche Fahrzeuge, beispielsweise Traktoren oder selbstfahrenden Erntemaschinen wie Feldhäcksler oder Mähdrescher, weisen üblicherweise eine Fahrerkabine für den Bediener des Fahrzeuges auf. Die Fahrerkabine weist dabei eine oder mehrere Kabinenscheiben auf, die dem Bediener eine Sicht nach draußen ermöglichen und ihn vor Umgebungseinflüssen, beispielsweise Regen, schützen können. Um die Übersichtlichkeit und somit auch die Sicherheit bei der Bedienung des landwirtschaftlichen Fahrzeuges zu erhöhen, sollen die Fahrerkabinen dem Bediener eine möglichst störungsfreie Sicht aus der Fahrerkabine ermöglichen. Um eine möglichst störungsfreie Sicht aus der Fahrerkabine zu ermöglichen, weisen heutige Fahrerkabinen oft eine großzügige Verglasung mit großflächigen Kabinenscheiben auf.

In den modernen landwirtschaftlichen Fahrzeugen sind eine Anzahl von Anzeigen und Bedienelementen angeordnet, welche zumindest zum Teil in einem Terminal mit einem Bildschirm zusammengefasst sein können. Die Ablesbarkeit und Bedienung des Terminals kann für den Bediener durch direktes, blendendes Licht und/oder durch zu intensives Streulicht erschwert werden, wodurch die Sicherheit bei der Bedienung des landwirtschaftlichen Fahrzeuges beeinträchtigt werden kann. Darüber hinaus kann eine Kabinenverglasung mit großflächigen Kabinenscheiben zu einer erhöhten Wärmeentwicklung in der Fahrerkabine führen, wodurch die Leistungsfähigkeit des Bedieners beeinträchtigt werden kann. Um dies zu vermeiden kann eine leistungsfähige Lüftung und/oder Klimaanlage für die Fahrerkabine erforderlich sein.

Aus der DE 41 28 717 A1 ist eine Blendschutzvorrichtung bekannt, welche an einer Scheibe, insbesondere einer Kraftfahrzeugscheibe, angeordnet ist. Die Blendschutzvorrichtung weist dabei reversibel von lichtdurchlässig auf lichtundurchlässig umschaltbare streifenförmige Blendenbereich entlang der oberen Kante der Scheibe auf, wobei die Blendenbereiche mittels eines Sensors hinter der Scheibe und den Blendenbereichen schaltbar sind. Nachteilig ist hierbei jedoch, dass ein Bediener lediglich vor direktem Blendlicht abgeschirmt werden kann und zudem die lichtundurchlässigen geschalteten Bereiche die Sicht des Bedieners behindern können.

Die Druckschrift US 2009/0058126 A1 offenbart eine Vorrichtung für ein Fahrzeug, die vorsieht, den Fahrer vor grellem Licht zu schützen, wobei die Vorrichtung eine Schutzscheibe mit vielen Pixeln umfasst, deren Transparenz und Lichtundurchlässigkeit veränderbar ist.

Es ist daher die Aufgabe der Erfindung ein landwirtschaftliches Fahrzeug bereitzustellen, das im Hinblick auf störendes externes Umgebungslicht verbesserte Arbeitsbedingungen aufweist, sowie eine Reduzierung der Wärmeentwicklung in der Fahrerkabine des landwirtschaftlichen Fahrzeuges ermöglicht.

Die Lösung der Aufgabe erfolgt erfindungsgemäß durch die kennzeichnenden Merkmale des Anspruches 1. Vorteilhafte Ausgestaltungen der Erfindung sind in den Unteransprüchen angegeben.

Ein erfindungsgemäßes landwirtschaftliches Fahrzeug weist eine Fahrerkabine auf, wobei die Fahrerkabine mindestens eine Kabinenscheibe aufweist. Erfindungsgemäß ist die mindestens eine Kabinenscheibe derart ausgebildet und ausgestaltet, dass eine Transparenz der Kabinenscheibe zumindest in einem Teilbereich, insbesondere stufenlos, veränderbar ist. Durch die, insbesondere stufenlos, veränderbare Transparenz zumindest eines Teilbereiches der Kabinenscheibe kann die Intensität des von außen auf die Fahrerkabine und durch die Kabinenscheiben hindurchscheinenden Umgebungslichtes derart vermindert werden, dass die Ablesbarkeit und Bedienung eines Bedienterminals sowohl bei direktem als auch bei indirektem Umgebungslicht, sogenanntem Streulicht, verbessert werden kann. Dadurch kann die Anzeige von Informationen für den Bediener verbessert werden. Die Durchsichtigkeit der Kabinenscheibe bleibt dabei während einer Veränderung der Transparenz erhalten, so dass der Bediener weiterhin einen im Wesentlichen ungehinderten Blick aus der Fahrerkabine hat. Durch eine flächige, insbesondere vollflächige, Veränderung der Transparenz, beispielsweise in Form einer Verdunkelung, der Kabinenscheibe können die Arbeitsbedingungen für den Bediener weiter verbessert werden. Darüber hinaus kann besonders bei großflächigen Kabinenscheiben durch eine verringerte Transparenz das in die Fahrerkabine einfallende Umgebungslicht reduziert und so die Wärmeentwicklung in der Fahrerkabine vermindert werden.

In einer bevorzugten Ausgestaltung der Erfindung ist die Kabinenscheibe derart ausgebildet, dass innerhalb einer Fläche mit veränderbarer Transparenz die Transparenz unterschiedlich stark veränderbar ist. Dies bedeutet, dass der Grad der Transparenz einer Kabinenscheibe innerhalb der Fläche der Kabinenscheibe zeitgleich unterschiedlich ausgebildet sein kann. Dadurch, dass innerhalb einer Fläche die Transparenz unterschiedlich stark veränderbar ist, kann vorteilhafterweise ein Verlauf beispielsweise einer Abdunkelung der Kabinenscheibe durch eine entsprechend veränderte Transparenz eingestellt werden. Zudem können Teilbereiche mit unterschiedlicher Transparenz ausgebildet werden, wodurch eine Abschirmung des Bedieners vor störenden Umgebungslicht verbessert werden kann.

Besonders bevorzugt ist die Transparenz der Kabinenscheibe in Abhängigkeit von der Helligkeit und/oder einer Einfallsrichtung des Umgebungslichtes in die Fahrerkabine und/oder auf eine Kabinenscheibe veränderbar. Dies hat den Vorteil, dass die Transparenz der Kabinenscheibe, beispielsweise zur Einstellung einer Abdunkelung der Kabinenscheibe, jeweils den vorherrschenden Lichtverhältnissen anpassbar ist. Darüber hinaus ist vorteilhaft, dass eine Veränderung der Transparenz nur so weit wie nötig vorgenommen zu werden braucht.

Weiterhin ist nach einer bevorzugten Ausgestaltung der Erfindung eine Sensorvorrichtung zur automatischen Veränderung der Transparenz der mindestens einen Kabinenscheibe vorgesehen. Vorteilhaft an der Sensorvorrichtung ist, dass durch Erfassung der Intensität, beispielsweise der Helligkeit des Umgebungslichtes, und/oder der Einfallsrichtung des Umgebungslichtes eine automatische Veränderung der Transparenz der Kabinenscheiben in Abhängigkeit der aktuellen Lichtverhältnisse einstellbar ist. Die Sensorvorrichtung kann dabei die Intensität und/oder Einfallsrichtung des Umgebungslichtes außerhalb und/oder innerhalb der Fahrerkabine erfassen.

Ferner ist bevorzugt vorgesehen, dass die Transparenz mehrerer Kabinenscheiben einzeln oder gemeinsam veränderbar ist, wodurch eine besonders präzise Anpassung der Transparenz von Kabinenscheiben an die aktuellen Lichtverhältnisse ermöglicht werden kann.

Besonders bevorzugt ist, dass eine Einstellvorrichtung zum manuellen verändern der Transparenz einer oder mehrerer Kabinenscheiben vorgesehen ist, wodurch dem Bediener des landwirtschaftlichen Fahrzeuges die Möglichkeit gegeben wird, die Veränderung der Transparenz einer Kabinenscheibe, beispielsweise zur Einstellung eines Verdunkelung oder Abtönung der Kabinenscheibe einzustellen, seinen individuellen Bedürfnissen anzupassen. Dabei kann beispielsweise jede Scheibe einzeln oder in Gruppen ausgewählt und die Art und/oder der Grad der Veränderung der Transparenz eingestellt werden.

Teil der Erfindung ist es, dass ein Bereich, dessen Transparenz veränderbar ist, in Form eines grafischen Elementes ausgebildet ist. Der Bereich in dem die Transparenz verändert wird ist dabei in Form eines grafischen Elementes, beispielsweise eines Buchstaben und/oder Piktogrammes, ausgebildet. Die das grafische Element umgebende Fläche der Kabinenscheibe kann eine gegenüber dem grafischen Element verschiedene Transparenz aufweisen. Dies hat den Vorteil, dass neben einer möglichen Abschirmung gegen störendes Umgebungslicht, dem Bediener, insbesondere situationsbezogen, Informationen unmittelbar in seinem Sichtfeld anzeigbar sind. Eine Anordnung der grafischen Elemente kann dabei frei auf der Kabinenscheibe wählbar und veränderbar sein.

In einer bevorzugten Ausgestaltung weist die Kabinenscheibe zumindest in einem Teilbereich elektrochrome Eigenschaften auf. Hierfür kann die Kabinenscheibe mit einem Material, welches elektrochrome Eigenschaften aufweist, beschichtet sein. Ebenso kann eine Folie mit elektrochromen Eigenschaften an der Kabinenscheibe oder innerhalb einer Zwischenschicht der Kabinenscheibe angeordnet sein. Durch Anlegen einer elektrischen Spannung, beispielsweise einer Gleichspannung, an das elektrochrome Material kann die Transparenz der Kabinenscheibe schrittweise und/oder stufenlos verändert werden. Hierbei kann die Durchsicht durch die Kabinenscheibe bei veränderter Transparenz im Wesentlichen unverändert bleiben.

Teil der Erfindung ist es, dass die Kabinenscheibe zumindest teilweise in Form eines transparenten Bildschirmes ausgebildet ist. Hierbei kann ein transparenter Bildschirm zumindest teilweise als Kabinenscheibe genutzt und angeordnet werden. Der transparente Bildschirm ermöglicht eine frei bestimmbare Anordnung und einen im wesentlichen stufenlos wählbaren Grad der Veränderung der Transparenz der Kabinenscheibe. Dies hat den Vorteil, dass dem Bediener Informationen präziser und flexibler angezeigt werden können.

Weiter ist in einer vorteilhaften Ausgestaltung der Erfindung vorgesehen, dass für die Veränderung der Transparenz ein Arbeitsmodus und ein Straßenfahrtmodus vorgesehen. Dies hat den Vorteil, dass die Einhaltung gesetzlicher Vorschriften, welche Fahrzeugscheiben und deren Ausgestaltung betreffen, insbesondere für den Straßenbetrieb, gewährleistet werden kann.

Bevorzugt ist der Arbeitsmodus und/oder der Straßenfahrtmodus automatisch in Abhängigkeit von einer Position des landwirtschaftlichen Fahrzeuges schaltbar. Hierbei kann ein automatisches Umschalten zwischen dem Straßenfahrtmodus und dem Arbeitsmodus vorgenommen werden, wodurch die Arbeitsbelastung des Bediener gesenkt werden kann.

Nachfolgend wird die Erfindung unter Bezugnahme auf die anliegenden Zeichnungen näher erläutert.

Es zeigen:
- Fig. 1:: eine schematische Darstellung eines landwirtschaftlichen Fahrzeuges mit erfindungsgemäßen Kabinenscheiben;
- Fig. 2:: eine schematische Ansicht eines landwirtschaftlichen Fahrzeuges mit in Teilbereichen veränderter Transparenz;
- Fig. 3:: eine schematische Ansicht eines landwirtschaftlichen Fahrzeuges mit Kabinenscheiben, deren Transparenz stufenlos verändert ist; und
- Fig. 4:: eine schematische, perspektivische Innenansicht einer Fahrerkabine mit Kabinenscheiben, die eine teilweise veränderte Transparenz in Form von grafischen Elementen aufweisen.

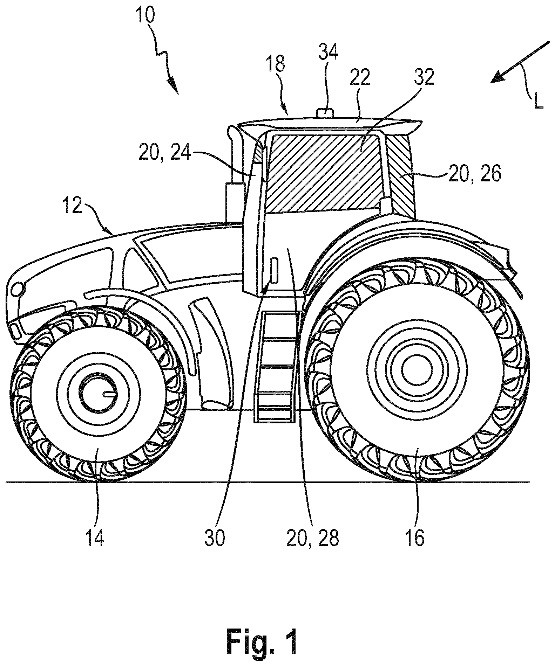

In Fig. 1 ist ein landwirtschaftliches Fahrzeug 10 in Form eines Traktors schematisch von der Seite dargestellt, wobei der grundsätzliche Aufbau eines Traktors als dem Fachmann bekannt angesehen wird. Ein landwirtschaftliches Fahrzeug 10 kann jedes zur landwirtschaftlichen Arbeit eingesetztes Fahrzeug sein, beispielsweise ein Frontlader oder eine Erntemaschine wie ein Mähdrescher oder Feldhäcksler. Der Traktor weist neben einer Antriebseinheit 12, welche dem Antrieb seiner Vorderräder 14 und/oder Hinterräder 16 dient, eine Fahrerkabine 18 zur Aufnahme eines Bedieners auf. Innerhalb der Fahrerkabine 18 sind üblicherweise auch Anzeige- und Bedienelemente (nicht dargestellt) zur Bedienung des landwirtschaftlichen Fahrzeuges 10 angeordnet. Um dem Bediener einen möglichst guten Überblick aus der Fahrerkabine 18 zu ermöglichen, weist die Fahrerkabine 18 des landwirtschaftlichen Fahrzeuges 10 großflächig ausgebildete Kabinenscheiben 20 auf. Die Kabinenscheiben 20 sind dabei im Wesentlichen unterbrechungsfrei rundherum unterhalb eines Daches 22 der Fahrerkabine 18 angeordnet. Eine Kabinenscheibe 20 kann dabei als Frontscheibe 24, welche sich beiderseits der Antriebseinheit 12 hinab erstrecken kann, Heckscheibe 26 oder Seitenscheibe 28 ausgebildet sein. Eine Anordnung einer Kabinenscheibe 20 in dem Dach 22 der Fahrerkabine 18 ist ebenfalls möglich. Eine Kabinenscheibe 20 in Form einer Seitenscheibe 28 kann auch in Form einer verschwenkbaren Fahrerkabinentür 30 ausgebildet sein, welche dem Bediener den Zugang in die Fahrerkabine 18 ermöglicht.

Erfindungsgemäß ist mindestens eine Kabinenscheibe 20 der Fahrerkabine 18 derart ausgebildet und ausgestaltet, dass eine Transparenz der Kabinenscheibe 20 zumindest in einem Teilbereich 26, insbesondere stufenlos, verstellbar ist. Unter der Transparenz einer Kabinenscheibe 18 ist dabei im Rahmen der Erfindung die Durchlässigkeit der Kabinenscheibe 18 für elektromagnetische Wellen, beispielsweise des für den Menschen sichtbaren Spektralbereiches, des ultravioletten Bereiches und/oder des infraroten Bereiches, zu verstehen. Die Veränderung der Transparenz kann dabei beispielsweise eine für den Bediener wahrnehmbare Abdunkelung der Kabinenscheibe 20 bewirken, wobei die Durchsichtigkeit der Kabinenscheibe 20 im Wesentlichen, beispielsweise ohne eine Eintrübung der Kabinenscheibe 20, erhalten bleibt. Durch die in der Transparenz veränderte, ungetrübte Kabinenscheibe 20 ist die Sicht des Bedieners aus der Fahrerkabine 18 nach draußen uneingeschränkt. Besonders vorteilhaft ist eine stufenlose Veränderung der Transparenz der Kabinenscheibe 20, da hierdurch beispielsweise die Abdunkelung der Kabinenscheibe 20 an die wirkenden Lichtverhältnisse anpassbar ist, und nur soweit wie nötig vorgenommen zu werden braucht. Zudem kann eine stufenlose Änderung der Transparenz der Kabinenscheibe 18 im Wesentlichen unbemerkt von dem Bediener erfolgen, wodurch die Aufmerksamkeit des Bedieners nicht von der Bedienung des landwirtschaftlichen Fahrzeuges 10 abgelenkt wird. Die Transparenz der Kabinenscheibe 20 kann dabei vollflächig oder zumindest in einem Teilbereich 32 veränderbar sein. Desweiteren kann die Kabinenscheibe 20 derart ausgebildet sein, dass die Transparenz für Licht aus dem infraroten Bereich des elektromagentischen Spektrums, insbesondere stufenlos, veränderbar ist. Dadurch kann, bei im Wesentlichen unveränderter Transparenz für das sichtbare Licht, die in die Fahrerkabine gelangende Infrarotstrahlung vermindert werden, wodurch eine Erwärmung in der Fahrerkabine 18 verringert werden kann. Dies hat den Vorteil, dass eine Lüftungs- und/oder Klimaanlage der Fahrerkabine 18 weniger Leistung benötigt und effizienter betrieben werden kann. Es ist weiterhin möglich, dass eine Kabinenscheibe 20 derart ausgebildet ist, dass die Transparenzen für unterschiedliche Wellenlängen einzeln und/oder gemeinsam veränderbar sind. Dabei können beispielsweise die Transparenzen der Kabinenscheibe 20 für sichtbares Licht und Licht aus dem infraroten Spektrum, sogenanntes Infrarotlicht, unabhängig voneinander regelbar und veränderbar sein.

Die Kabinenscheibe 20 kann zum Verändern der Transparenz flächig oder zumindest ein einem Teilbereich elektrochrome Eigenschaften aufweisen. Dies kann beispielsweise durch eine unmittelbar auf der Kabinenscheibe 20 aufgebrachte elektrochrome Schicht oder mittels einer Folie mit elektrochromen Eigenschaften realisiert werden. Dabei werden für die Veränderung der Transparenz der Kabinenscheibe 20 die Eigenschaft des elektrochromen Materials genutzt, die Transparenz für elektromagnetische Wellen je nach angelegter elektrischer Gleichspannung zu verändern.

Die Transparenz einer Kabinenscheibe 20 kann dabei in Abhängigkeit von der Helligkeit und/oder einer Einfallsrichtung eines Umgebungslichtes L in die oder auf die Fahrerkabine 18, beispielsweise manuell und/oder automatisch, verändert werden. Beispielsweise kann in Abhängigkeit von der Helligkeit des Umgebungslichtes L die Transparenz einer oder mehrerer Kabinenscheiben 20 einheitlich und gleichmäßig verändert werden. Dadurch kann beispielsweise in die Fahrerkabine fallendes Streulicht durch die Kabinenscheiben 20 soweit gedämpft werden, dass der Bediener die Lichtverhältnisse innerhalb der Fahrerkabine 18 als angenehm und nicht störend empfindet.

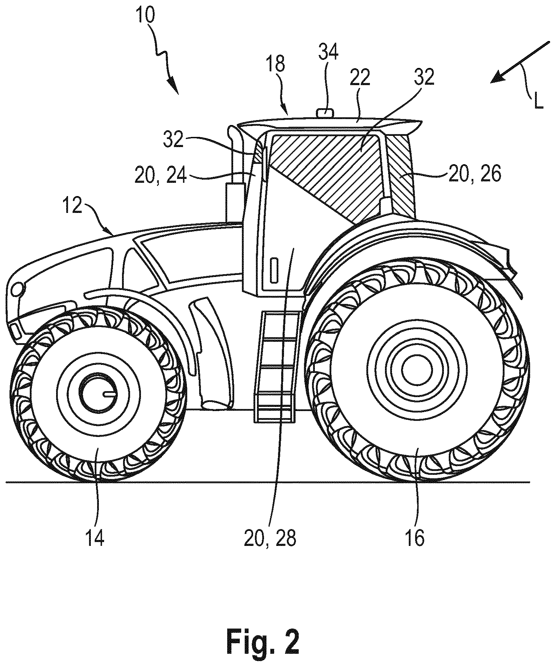

Bei einer Veränderung der Transparenz in Abhängigkeit von einer Einfallsrichtung des Umgebungslichte L, können eine oder mehrere Kabinenscheiben 20, 24, 26, 28 einzeln oder gemeinsam in ihrer Transparenz verändert werden (Figur 2), wobei die Kabinenscheiben 20, 24, 26, 28 gleichmäßig oder individuell verändert werden können. Zur Bestimmung der Helligkeit und/oder der Einfallsrichtung des Umgebungslichtes L innerhalb und/oder außerhalb der Fahrerkabine 18 kann das landwirtschaftliche Fahrzeug 10 eine Sensorvorrichtung 34 aufweisen. Die Sensorvorrichtung 34 kann zur Erfassung des Umgebungslichtes beispielsweise auf dem Dach 22 der Fahrerkabine 18 angeordnet sein. Alternativ oder zusätzlich kann eine Sensorvorrichtung 34 innerhalb der Fahrerkabine 18 angeordnet sein. Die durch die Sensorvorrichtung 34 bestimmte Einfallsrichtung des Umgebungslichtes L kann genutzt werden, um direktes Blendlicht, welches auf den Bediener in der Fahrerkabine 18 treffen würde, durch eine entsprechende Veränderung der Transparenz einer oder mehrerer Kabinenscheiben 20, 24, 26, 28 zu dämpfen. Bei dem in Figur 2 dargestellten landwirtschaftlichen Fahrzeug 10 fällt das Umgebungslicht L von hinten und schräg von oben auf das Fahrzeug 10 und die Fahrerkabine 18. Durch die Sensorvorrichtung 34 auf dem Dach 22 der Fahrerkabine 18 wird die Einfallsrichtung bestimmt. Darauf basierend kann beispielsweise eine mit der Sensorvorrichtung 34 verbundene Steuervorrichtung (nicht dargestellt), die Transparenz einer oder mehrerer Kabinenscheiben 20, 26, 28 zumindest in einem Teilbereich 32 derart verändern, dass der Bediener in der Fahrerkabine 18 vor einer Blendwirkung des direkt einfallenden Umgebungslichtes L weitestgehend geschützt werden kann, wobei eine Beeinträchtigung der Sicht aus der Fahrerkabine 18 dabei aber weitestgehend vermieden wird. Dabei kann die Transparenz der Heckscheibe 26 vollflächig derart geändert werden, dass eine starke Abdunkelung der Heckscheibe 26 eingestellt wird, beispielsweise für sichtbares Licht und Infrarotlicht. Die Seitenscheibe 28 der Fahrerkabinentür 30 kann in einem Teilbereich 32 eine der Heckscheibe 26 entsprechende Veränderung der Transparenz aufweisen und entsprechend stark abgedunkelt sein. In Figur 2 ist nur eine Seitenscheibe 28 dargestellt, eine zweite Seitenscheibe 28 auf der anderen Fahrzeugseite kann entsprechend in ihrer Transparenz verändert werden.

Ein an den stark abgedunkelten Teilbereich 32 angrenzender zweiter Teilbereich 36 der Seitenscheibe 28 kann eine unveränderte oder beispielsweise höhere Transparenz aufweisen. Dadurch kann beispielsweise bei einer insgesamt großen Helligkeit des Umgebungslichtes L das in die Fahrerkabine 18 eintretende Streulicht vermindert werden. Bei einer Änderung der Helligkeit und/oder des Einfallswinkel des Umgebungslichtes L, beispielsweise bei einer Fahrt des Fahrzeuges 10 über ein Feld, kann die Transparenz einer jeden Kabinenscheibe 20 entsprechend angepasst und verändert werden.

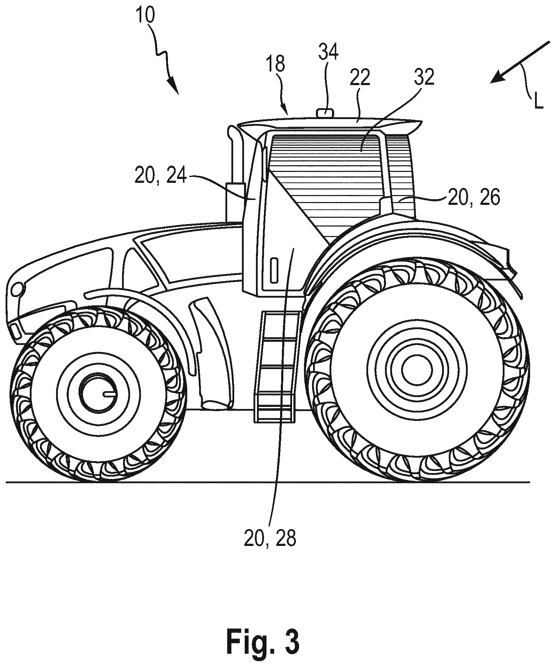

In Figur 3 sind Kabinenscheiben 20 dargestellt, deren Grad der Transparenz innerhalb der Kabinenscheibe 20 unterschiedlich stark verändert ist. Beispielsweise kann der Grad der Transparenz der Heckscheibe 26 und der Seitenscheibe 28 in einem oberen Bereich der jeweiligen Kabinenscheibe 20, 26, 28 ein Minimum und in einem unteren Bereich ein Maximum aufweisen. Der Grad der Transparenz kann dabei abschnittweise oder stufenlos verändert sein, so dass beispielsweise ein gestufter oder stufenloser Verlauf einer Abdunkelung der Kabinenscheibe 20 einstellbar ist. Eine maximale Transparenz bedeutet dabei ein im Wesentlichen ungehindertes einfallen elektromagnetischer Wellen, beispielsweise des sichtbaren Lichtes und/oder Infrarotlichtes, wobei eine minimale Transparenz deren höchstmögliche Absorption bedeutet. Die maximale und minimale Transparenz einer Kabinenscheibe 20 ist dabei von der jeweiligen technischen Ausgestaltung der Kabinenscheibe 20 abhängig. So kann bei einer minimalen Transparenz die Kabinenscheibe 20 beispielsweise undurchsichtig sein oder deutlich abgedunkelt bei gleichzeitiger Durchsichtigkeit.

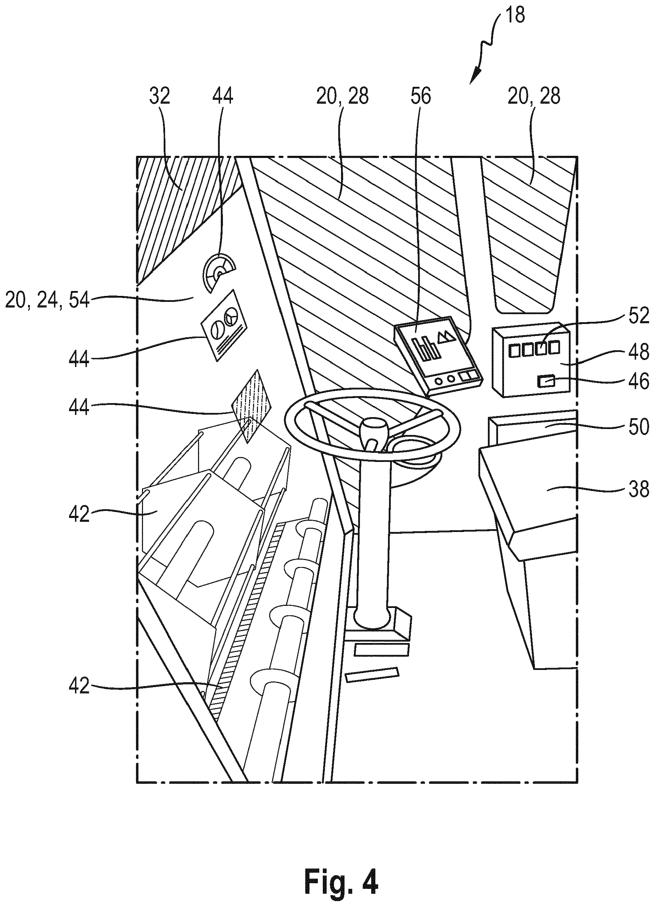

In Figur 4 ist eine perspektivische Innenansicht einer Fahrerkabine 18 eines landwirtschaftlichen Fahrzeuges 10 in Form eines Mähdreschers dargestellt. Ein Bediener kann von einem Fahrersitz 38 aus durch die Frontscheibe 24 ungehindert auf ein Mähwerk 40 und eine Haspel 42 des Mähdreschers blicken. Zur Anzeige von Informationen und zur Bedienung des landwirtschaftlichen Fahrzeuges 10 ist ein Bedienterminal 56 seitlich in der Fahrerkabine 18 angeordnet. Die Seitenscheiben 20, 28 sind vollflächig mit einer einheitlich Transparenz abgedunkelt und die Frontscheibe 20, 24 weist in einem oberen Teilbereich 32 einen abgedunkelten Streifen mit reduzierter Transparenz auf, beispielsweise als Blendschutz vor direktem Umgebungslicht L. Die Transparenz der Kabinenscheibe 20, 24 kann zusätzlich in einem geometrisch definierten Bereich, beispielsweise in Form eines oder mehrerer grafischer Elemente 44, wie Buchstaben oder Piktogrammen, veränderbar sein. Die Frontscheibe 20, 24 weist mehrere dieser grafischen Elemente 44 auf, die eine gegenüber der umgebenden Kabinenscheibe 20 veränderte Transparenz aufweisen, wodurch die grafischen Elemente 44 für den Bediener sichtbar sind und zur Darstellung von Informationen dienen können. Die grafischen Elemente 44 können dabei Informationen in Text- und/oder Bildform darstellen, wobei die grafischen Elemente 44 beliebig auf der Kabinenscheibe 20 anordbar sind. Um grafische Elemente 44 durch eine veränderte Transparenz einer Kabinenscheibe 20 darstellen zu können, kann die Kabinenscheibe 20 zumindest teilweise in Form eines transparenten Bildschirmes 54 ausgebildet sein. Die in Figur 4 dargestellte Kabinenscheibe 20, 24 kann vollflächig in Form eines transparenten Bildschirmes 54 ausgebildet sein. Ein transparenter Bildschirm 54 kann beispielsweise auf organischen Leuchtdioden basieren, sogenannten OLEDs, welche leuchtende Dünnschichtbauelemente aus organischen halbleitenden Materialien sind. Dies hat den Vorteil, dass neben einer flächig veränderbaren Transparenz der Kabinenscheibe 20,54 eine Anzahl und Form von Bereichen mit veränderter Transparenz, beispielsweise als grafische Elemente 44, frei anordbar und einstellbar sind. Die Durchsichtigkeit des transparenten Bildschirmes 54 und damit der Kabinenscheibe 20 bleibt dabei im Wesentlichen erhalten, so dass der Blick des Bedieners aus der Fahrerkabine 18 hinaus im Wesentlichen unbeeinträchtigt ist.

Das landwirtschaftliche Fahrzeug 10 weist zudem für den manuellen und/oder automatischen Betrieb der in ihrer Transparenz verstellbaren Kabinenscheiben 20 einen Straßenfahrtmodus und einen Arbeitsmodus auf. Zwischen dem Straßenfahrtmodus und dem Arbeitsmodus kann mittels eines Wahlschalters 46 umgeschaltet werden. Dadurch kann sichergestellt werden, dass insbesondere bei der Straßenfahrt die gesetzlichen Vorschriften eingehalten werden, welche vorgeben, welche Bereiche wie stark in der Transparenz, insbesondere Lichtdurchlässigkeit, verändert werden dürfen. So dürfen beispielsweise die Frontscheibe 20,24 und die Seitenscheiben 20,28 während der Straßenfahrt nicht abgedunkelt werden, ihre Transparenz also nicht verringert werden. Das in der Figur 4 dargestellte landwirtschaftliche Fahrzeug wird folglich in dem Arbeitsmodus mit abgedunkelten Seitenscheiben 20, 28 betrieben.

Das Umschalten zwischen dem Straßenfahrtmodus und dem Arbeitsmodus kann automatisch durch eine automatische Steuervorrichtung 48 erfolgen, welche beispielsweise von einer Navigationseinheit 50 die aktuelle Position des Fahrzeuges 10 übermittelt bekommt, so dass bei verlassen eines Feldes automatisch auf den Straßenfahrtmodus umgeschaltet werden kann. Die Steuervorrichtung 48 kann auch mit der Sensorvorrichtung 34 verbunden sein, so dass mittels der Steuervorrichtung 48 die Veränderung der Transparenz der Kabinenscheiben automatisch regelbar ist. Zudem können manuelle Einstellvorrichtungen 52 zur manuellen Veränderung der Transparenz einer ausgewählten Kabinenscheibe 20 vorgesehen sein.

### Bezugszeichenliste

- 10: landwirtschaftliches Fahrzeug
- 12: Antriebseinheit
- 14: Vorderräder
- 16: Hinterräder
- 18: Fahrerkabine
- 20: Kabinenscheibe
- 22: Dach
- 24: Frontscheibe
- 26: Heckscheibe
- 28: Seitenscheibe
- 30: Fahrerkabinentür
- 32: Teilbereich
- 34: Sensorvorrichtung
- 36: Teilbereich
- 38: Fahrersitz
- 40: Mähwerk
- 42: Haspel
- 44: grafisches Element
- 46: Wahlschalter
- 48: Steuervorrichtung
- 50: Navigationseinheit
- 52: manuelle Einstellvorrichtung
- 54: transparenter Bildschirm
- 56: Bedienterminal

- L: Umgebungslicht

## Patentansprüche

1. Landwirtschaftliches Fahrzeug mit einer Fahrerkabine (18), wobei die Fahrerkabine (18) mindestens eine Kabinenscheibe (20) aufweist, wobei die mindestens eine Kabinenscheibe (20) derart ausgebildet und ausgestaltet ist, dass eine Transparenz der Kabinenscheibe (20) zumindest in einem Teilbereich (32,36), insbesondere stufenlos, veränderbar ist, wobei ein Bereich, dessen Transparenz veränderbar ist, in Form eines grafischen Elementes (44) ausgebildet ist, **dadurch gekennzeichnet, dass** das grafische Element (44) in Form eines Buchstaben und/oder eines Piktogramms ausgebildet ist, und die das grafische Element (44) umgebende Fläche der Kabinenscheibe (20) eine gegenüber dem grafischen Element (44) verschiedene Transparenz aufweist, wobei die Kabinenscheibe (20) zumindest teilweise in Form eines transparenten Bildschirmes (54) ausgebildet ist.

2. Landwirtschaftliches Fahrzeug nach Anspruch 1, **dadurch gekennzeichnet, dass** die Kabinenscheibe (20) derart ausgebildet ist, dass innerhalb einer Fläche mit veränderbarer Transparenz die Transparenz unterschiedlich stark veränderbar ist.

3. Landwirtschaftliches Fahrzeug nach Anspruch 1 oder 2, **dadurch gekennzeichnet, dass** die Transparenz der Kabinenscheibe (20) in Abhängigkeit von der Helligkeit und/oder einer Einfallsrichtung eines Umgebungslichtes (L) in die Fahrerkabine (18 und/oder auf die Kabinenscheibe (20) veränderbar ist.

4. Landwirtschaftliches Fahrzeug nach einem der vorherigen Ansprüche, **dadurch gekennzeichnet, dass** eine Sensorvorrichtung (34) zur automatischen Veränderung der Transparenz der mindestens einen Kabinenscheibe (20) vorgesehen ist.

5. Landwirtschaftliches Fahrzeug nach einem der vorherigen Ansprüche, **dadurch gekennzeichnet, dass** die Transparenz mehrerer Kabinenscheiben (20, 24, 26, 28, 54) einzeln oder gemeinsam veränderbar ist.

6. Landwirtschaftliches Fahrzeug nach einem der vorherigen Ansprüche, **dadurch gekennzeichnet, dass** eine Einstellvorrichtung (52) zum manuellen verändern der Transparenz einer oder mehrerer Kabinenscheiben (20, 24, 26, 28, 54) vorgesehen ist.

7. Landwirtschaftliches Fahrzeug nach einem der vorherigen Ansprüche, **dadurch gekennzeichnet, dass** die Kabinenscheibe (20) zumindest in einem Teilbereich (32,36) elektrochrome Eigenschaften aufweist.

8. Landwirtschaftliches Fahrzeug nach einem der vorherigen Ansprüche, **dadurch gekennzeichnet, dass** für die Veränderung der Transparenz ein Arbeitsmodus und ein Straßenfahrtmodus vorgesehen ist.

9. Landwirtschaftliches Fahrzeug nach einem der vorherigen Ansprüche, **dadurch gekennzeichnet, dass** der Arbeitsmodus und/oder der Straßenfahrtmodus automatisch in Abhängigkeit von einer Position des landwirtschaftlichen Fahrzeuges (10) schaltbar ist.

## Claims

1. An agricultural vehicle comprising a driver's cab (18), wherein the driver's cab (18) has at least one cab window (20), wherein the at least one cab window (20) is of such a design and configuration that a transparency of the cab window (20) is changeable, in particular steplessly, at least in a partial region (32, 36) thereof, wherein a region whose transparency is changeable is in the form of a graphical element, **characterised in that** the graphical element (44) is in the form of a letter and/or a pictogram and the area of the cab window (20) surrounding the graphical element (44) is of a transparency different from the graphical element (44), wherein the cab window (20) is at least partially in the form of a transparent display screen.

2. An agricultural vehicle according to claim 1 **characterised in that** the cab window (20) is so designed that the transparency is changeable to different extents within an area with changeable transparency.

3. An agricultural vehicle according to claim 1 or claim 2 **characterised in that** the transparency of the cab window (20) is changeable in dependence on the brightness and/or a direction of incidence of an ambient light (L) into the driver's cab and/or onto the cab window (20).

4. An agricultural vehicle according to one of the preceding claims **characterised in that** there is provided a sensor device (34) for automatically changing the transparency of the at least one cab window (20).

5. An agricultural vehicle according to one of the preceding claims **characterised in that** the transparency of a plurality of cab windows (20, 24, 26, 28, 54) is changeable individually or jointly.

6. An agricultural vehicle according to one of the preceding claims **characterised in that** there is provided an adjusting device (52) for manually changing the transparency of one or more cab windows (20, 24, 26, 28, 54).

7. An agricultural vehicle according to one of the preceding claims **characterised in that** the cab window (20) has electrochromic properties at least in a partial region (32, 36) thereof.

8. An agricultural vehicle according to one of the preceding claims **characterised in that** there are provided a working mode and an on-road travel mode for the change in transparency.

9. An agricultural vehicle according to one of the preceding claims **characterised in that** the working mode and/or the on-road travel mode are automatically switchable in dependence on a position of the agricultural vehicle.

## Revendications

1. Véhicule agricole comprenant une cabine de conduite (18), la cabine de conduite (18) comprenant au moins une vitre de cabine (20), la au moins une vitre de cabine (20) étant conçue et conformée de façon qu'une transparence de la vitre de cabine (20) soit variable, en particulier progressivement, au moins dans une zone partielle (32, 36), une zone dont la transparence est variable étant conçue sous la forme d'un élément graphique (44), **caractérisé en ce que** l'élément graphique (44) est conçu en forme de lettre et/ou de pictogramme, et la surface de la vitre de cabine (20) entourant l'élément graphique (44) présente une transparence différente de celle de l'élément graphique (44), la vitre de cabine (20) étant conçue au moins en partie en forme d'écran transparent (54).

2. Véhicule agricole selon la revendication 1, **caractérisé en ce que** la vitre de cabine (20) est conçue de façon que, à l'intérieur d'une surface à transparence variable, la transparence soit variable avec une intensité différente.

3. Véhicule agricole selon la revendication 1 ou 2, **caractérisé en ce que** la transparence de la vitre de cabine (20) est variable en fonction de la clarté et/ou d'une direction d'incidence d'une lumière ambiante (L) dans la cabine de conduite (18) et/ou sur la vitre de cabine (20).

4. Véhicule agricole selon une des revendications précédentes, **caractérisé en ce qu'**un dispositif de capteur (34) est prévu pour faire varier automatiquement la transparence de la au moins une vitre de cabine (20).

5. Véhicule agricole selon une des revendications précédentes, **caractérisé en ce que** la transparence de plusieurs vitres de cabine (20, 24, 26, 28, 54) est variable individuellement ou conjointement.

6. Véhicule agricole selon une des revendications précédentes, **caractérisé en ce qu'**un dispositif de réglage (52) est prévu pour faire varier manuellement la transparence d'une ou plusieurs vitres de cabine (20, 24, 26, 28, 54).

7. Véhicule agricole selon une des revendications précédentes, **caractérisé en ce que**, au moins dans une zone partielle (32, 36), la vitre de cabine (20) présente des propriétés électrochromes.

8. Véhicule agricole selon une des revendications précédentes, **caractérisé en ce que**, pour la variation de la transparence, il est prévu un mode de travail et un mode de trajet sur route.

9. Véhicule agricole selon une des revendications précédentes, **caractérisé en ce que** le mode de travail et/ou le mode de trajet sur route est commutable automatiquement en fonction d'une position du véhicule agricole (10).
